(19)

Europäisches Patentamt

European Patent Office

Office européen des brevets

(11)     **EP 4 285 292 B1**

## (12)     EUROPEAN PATENT SPECIFICATION

(45) Date of publication and mention
of the grant of the patent:
**04.03.2026 Bulletin 2026/10**

(21) Application number: **21922731.1**

(22) Date of filing: **29.01.2021**

(51) International Patent Classification (IPC):
**G06N 20/00** (2019.01)     **G06N 3/08** (2023.01)
**G06N 5/04** (2023.01)     **H04L 41/00** (2022.01)

(52) Cooperative Patent Classification (CPC):
**G06N 3/08; G06N 3/044; G06N 3/0442;
G06N 3/045; G06N 3/0464; G06N 3/09;
G06N 3/098;** G06N 3/048

(86) International application number:
**PCT/IN2021/050097**

(87) International publication number:
**WO 2022/162677 (04.08.2022 Gazette 2022/31)**

(54) **DISTRIBUTED MACHINE LEARNING WITH NEW LABELS USING HETEROGENEOUS LABEL DISTRIBUTION**

VERTEILTES MASCHINENLERNEN MIT NEUEN ETIKETTEN UNTER VERWENDUNG VON HETEROGENER ETIKETTENVERTEILUNG

APPRENTISSAGE MACHINE DISTRIBUÉ AVEC DE NOUVELLES ÉTIQUETTES À L'AIDE D'UNE DISTRIBUTION D'ÉTIQUETTE HÉTÉROGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2023 Bulletin 2023/49**

(73) Proprietor: **Telefonaktiebolaget LM Ericsson
(publ)
164 83 Stockholm (SE)**

(72) Inventors:
• **PEREPU, Satheesh Kumar**
**Chennai, 600131 (IN)**
• **GAUTHAM KRISHNA, Gudur**
**Chennai, 600092 (IN)**

(74) Representative: **Ericsson
Patent Development
Torshamnsgatan 21-23
164 80 Stockholm (SE)**

(56) References cited:
**US-B2- 10 657 461     US-B2- 9 147 129**

• **GAUTHAM KRISHNA ET AL: "Resource-Constrained Federated Learning with Heterogeneous Labels and Models", 6 November 2020 (2020-11-06), XP093204620, Retrieved from the Internet <URL:https://arxiv.org/pdf/ 2011.03206>**
• **NAYAK GAURAV KUMAR ET AL: "Zero-Shot Knowledge Distillation in Deep Networks", ARXIV, 20 May 2019 (2019-05-20), XP055823605, Retrieved from the Internet <URL:https://arxiv. org/pdf/1905.08114.pdf> [retrieved on 20210713]**
• **WANG CHENGJIA ET AL: "Industrial Cyber-Physical Systems-Based Cloud IoT Edge for Federated Heterogeneous Distillation", IEEE TRANSACTIONS ON INDUSTRIAL INFORMATICS, IEEE SERVICE CENTER, NEW YORK, NY, US, vol. 17, no. 8, 7 July 2020 (2020-07-07), pages 5511 - 5521, XP011853199, ISSN: 1551-3203, [retrieved on 20210503], DOI: 10.1109/TII.2020.3007407**
• **GAUTHAM KRISHNA GUDUR ET AL: "Zero-Shot Federated Learning with New Classes for Audio Classification", ARXIV.ORG, CORNELL UNIVERSITY LIBRARY, 201 OLIN LIBRARY CORNELL UNIVERSITY ITHACA, NY 14853, 18 June 2021 (2021-06-18), XP081991864**

EP 4 285 292 B1

**Description**

TECHNICAL FIELD

Disclosed are embodiments related to distributed machine learning and, in particular, to distributed machine learning, such as, for example, federated learning, with new labels using heterogeneous label distribution.

BACKGROUND

In the past few years, machine learning has led to major breakthroughs in various areas, such as natural language processing, computer vision, speech recognition, and Internet of Things (IoT), with some breakthroughs related to automation and digitalization tasks. Most of this success stems from collecting and processing big data in suitable environments. For some applications of machine learning, this process of collecting data can be incredibly privacy invasive. One potential use case is to improve the results of speech recognition and language translation, while another one is to predict the next word typed on a mobile phone to increase the speed and productivity of the person typing. In both cases, it would be beneficial to directly train on the same data instead of using data from other sources. This would allow for training a machine learning (ML) model (referred to herein as "model" also) on the same data distribution (i.i.d. - independent and identically distributed) that is also used for making predictions. However, directly collecting such data might not always be feasible owing to privacy concerns. Users may not prefer nor have any interest in sending everything they type to a remote server/cloud.

One recent solution to address this is the introduction of federated learning, a new distributed machine learning approach where the training data does not leave the users' computing device at all. Instead of sharing their data directly, the client computing devices themselves compute weight updates using their locally available data. It is a way of training a model without directly inspecting clients' or users' data on a server node or computing device. Federated learning is a collaborative form of machine learning where the training process is distributed among many users. A server node or computing device has the role of coordinating between models, but most of the work is not performed by a central entity anymore but by a federation of users or clients.

After the model is initialized in every user or client computing device, a certain number of devices are randomly selected to improve the model. Each sampled user or client computing device receives the current model from the server node or computing device and uses its locally available data to compute a model update. All these updates are sent back to the server node or computing device where they are averaged, weighted by the number of training examples that the clients used. The server node or computing device then applies this update to the model, typically by using some form of gradient descent.

Current machine learning approaches require the availability of large datasets, which are usually created by collecting huge amounts of data from user or client computing devices. Federated learning is a more flexible technique that allows training a model without directly seeing the data. Although the machine learning process is used in a distributed way, federated learning is quite different to the way conventional machine learning is used in data centers. The local data used in federated learning may not have the same guarantees about data distributions as in traditional machine learning processes, and communication is oftentimes slow and unstable between the local users or client computing devices and the server node or computing device. To be able to perform federated learning efficiently, proper optimization processes need to be adapted within each user machine or computing device. For instance, different telecommunications operators will each generate huge alarm datasets and relevant features. In this situation, there may be a good list of false alarms compared to the list of true alarms. For such a machine learning classification task, typically, the dataset of all operators in a central hub/repository would be required beforehand. This is required since different operators will encompass a variety of features, and the resultant model will learn their characteristics. However, this scenario is extremely impractical in real-time since it requires multiple regulatory and geographical permissions; and, moreover, it is extremely privacy-invasive for the operators. The operators often will not want to share their customers' data out of their premises. Hence, distribute machine learning, such as federated learning, may provide a suitable alternative that can be leveraged to greater benefit in such circumstances.

Gautham Krishna ET AL: "Resource-Constrained Federated Learning with Heterogeneous Labels and Models", ARXIV, 6 November 2020 (2020-11-06), XP093204620, https://arxiv.org/pdf/2011.03206 proposes a unified zero-shot framework to handle these model heterogeneities and independence challenges during federated learning.

Nayak Gaurav Kumar ET AL: "Zero-Shot Knowledge Distillation in Deep Networks", ARXIV, 20 May 2019 (2019-05-20), XP055823605, https://arxiv.org/pdf/1905.08114.pdf proposes a novel data-free method to train a smaller model (Student) from a high capacity source model (Teacher) so as to retain most of its performance

SUMMARY

The concept of distributed machine learning, such as federated learning, is to build machine learning models based on data sets that are distributed across multiple computing devices while preventing data leakage. *See, e.g.,* Bonawitz, Keith, et al. "Towards federated learning at scale: System design." arXiv preprint arXiv:1902.01046 (2019). Recent challenges and improvements have been focusing on overcoming the statistical challenges in federated learning. There are also research efforts to make federated learning more personalizable. The above works all focus on on-device federated learning where distributed mobile user interactions are involved and communication cost in massive distribution, imbalanced data distribution, and device reliability are some of the major factors for optimization.

However, there is a shortcoming with the current federated learning approaches proposed. It is usually inherently assumed that user or client computing devices, referred to herein as clients or users also, try to train/update the same model architecture. In this case, clients or users do not have the freedom to choose their own architectures and ML modeling techniques. This can be a problem with clients or users since it can result in either overfitting or under fitting the local models on the computing devices. This might also result in an incompetent global model in the global server node or computing device, hereinafter referred as global user also, after model updating. Hence, it can be preferable for clients or users to select their own architecture/model tailored to their convenience, and the central resource can be used to combine these (potentially different) models in an effective manner.

Another shortcoming with the current approaches is that a real-time client or user might not have samples following an i.i.d. distribution. For instance, in an iteration client or user A can have 100 positive samples and 50 negative samples, while user B can have 50 positive sample, 30 neutral samples and 0 negative samples. In this case, the models in a federated learning setting with these samples can result in a poor global model.

Further, current federated learning approaches can only handle the situation where each of the local models have the same labels across all the clients or users and do not provide the flexibility to handle unique labels, or labels that may only be applicable to a subset of the clients or users. However, in many practical applications, having unique labels or new or overlapping unseen labels that may only be applicable to a subset of the clients or users, for each local model can be an important and common scenario owing to their dependencies and constraints on specific regions, demographics, etc. In this case, there may be different labels across all the data points specific to the region.

Recently, a method enabling the use of heterogeneous model types and architectures among users of federated learning was developed by the assignee of the subject application and is disclosed in PCT/IN2019/050736. Further, a method which can handle heterogeneous labels and heterogeneous models in a federated learning setting was developed by the assignee of the subject application and is disclosed in PCT/IN2020/050618. However, there still remains a need for a method which can handle new and unseen heterogeneous labels in a distributed machine learning setting.

Embodiments disclosed herein provide methods which can handle new and unseen heterogeneous labels in a distributed machine learning setting. Embodiments disclosed herein provide a way, in, for example, federated learning, to handle new unseen labels with heterogeneous label distribution for all the users for a given problem of interest, i.e., image classification, text classification etc. The terms "labels" and "classes" are used herein interchangeably, and the methods disclosed and claimed herein are applicable to, and adapted for handling, both new and unseen heterogeneous labels and classes, as those terms are used herein and, as well, as generally understood by those of ordinary skill in the art. As described in further detail with respect to exemplary embodiments, classes may be, for example, "Cat", "Dog", "Elephant", etc., and labels from those classes include, similarly, specific instances of "Cat", "Dog", "Elephant", etc.

While embodiments handle the unseen heterogeneous labels in a federated learning setting, it is generally assumed that there is a public dataset available with all the local clients or users and a global user. Instead of sending the local model updates to the global user, the local users send the softmax probabilities obtained from the public dataset. Embodiments disclosed herein provide a framework with a zero-shot learning mechanism by synthesizing Data Impressions from class similarity matrices to learn new classes (labels). In some embodiments, in order to incorporate trustworthiness of local clients or users reporting labels, an unsupervised clustering technique to validate newly reported classes (labels) across local clients or users is used.

In this way, for example, the new classes (labels) are added to the public dataset again for the next federated learning iteration. An added advantage of embodiments is that the local clients or users can fit their own models (heterogeneous models) in the federated learning approach.

Embodiments can also advantageously handle new and unseen heterogeneous labels, enable the local clients or users to have different new and unseen classes (labels) across local devices during federated learning, handle heterogeneous label distributions across users, which is common in most industries, and handle different data distributions and model architectures across users.

The invention is defined by the appended claims.

BRIEF DESCRIPTION OF THE DRAWINGS

The accompanying drawings, which are incorporated herein and form part of the specification, illustrate various embodiments.

FIG. 1 illustrates a federated learning system according to an embodiment.
FIG. 2 illustrates a federated learning system according to an embodiment.
FIG. 3A illustrates a message diagram according to an embodiment.
FIG. 3B illustrates a message diagram according to an embodiment.
FIG. 4A is a flow chart according to an embodiment.
FIG. 4B is a flow chart according to an embodiment.
FIG. 5A is a flow chart according to an embodiment.
FIG. 5B is a flow chart according to an embodiment.
FIG. 6 is a block diagram of an apparatus according to an embodiment.
FIG. 7 is a block diagram of an apparatus according to an embodiment.

DETAILED DESCRIPTION

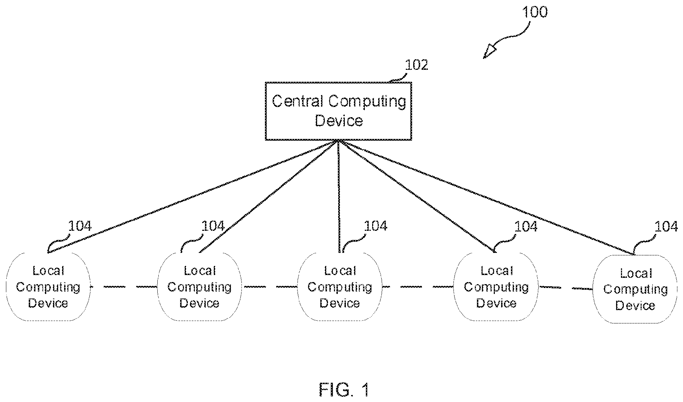

FIG. 1 illustrates a system 100 of federated learning according to an embodiment. As shown, a central computing device 102 is in communication with one or more local computing devices 104. As described in further detail herein, in some embodiments, a local client or user is associated with a local computing device 104, and a global user is associated with a central server or computing device 102. In some embodiments, local computing devices 104 or local users may be in communication with each other utilizing any of a variety of network topologies and/or network communication systems. In some embodiments, central computing device 102 may include a server device, cloud server or the like. In some embodiments, local computing devices 104 may include user devices or user equipment (UE), such as a smart phone, tablet, laptop, personal computer, and so on, and may also be communicatively coupled through a common network, such as the Internet (e.g., via WiFi) or a communications network (e.g., LTE or 5G). While a central computing device is shown, the functionality of central computing device 102 may be distributed across multiple nodes, computing devices and/or servers, and may be shared between one or more of the local computing devices 104.

Federated learning as described in embodiments herein may involve one or more rounds, where a global model is iteratively trained in each round. Local computing devices 104 may register with the central computing device 102 to indicate their willingness to participate in the federated learning of the global model, and may do so continuously or on a rolling basis. Upon registration (and potentially at any time thereafter), the central computing device 102 may select a model type and/or model architecture for the local computing device to train. Alternatively, or in addition, the central computing device 102 may allow each local computing device 104 to select a model type and/or model architecture for itself. The central computing device 102 may transmit an initial model to the local users 104. For example, the central computing device 102 may transmit to the local users 104 a global model (e.g., newly initialized or partially trained through previous rounds of federated learning). The local users 104 may train their individual models locally with their own data. The results of such local training may then be reported back to central computing device 102, which may pool the results and update the global model. This process may be repeated iteratively. Further, at each round of training the global model, central computing device 102 may select a subset of all registered local users 104 (e.g., a random subset) to participate in the training round.

Embodiments disclosed herein provide a way to handle new, unseen heterogeneous labels among different local users or computing devices 104.

To demonstrate the general scenario of new, unseen classes or labels with heterogeneous label distribution among local users, let us assume the task of image classification in a federated learning setting across different animals with three local users. In this example, User 1 may have labels from two classes -- 'Cat' and 'Dog'; User 2 may have labels from two classes -- 'Dog' and 'Pig'; and User 3 may have labels from two classes -- 'Cat' and 'Pig' -- in the first iteration of federated learning. In the second or following iterations, in this example, a new class exists with label 'Sheep' for User 1 and a new class exists with label 'Elephant' for User 3. In this example, for all the users, they are working towards image classification and the labels of the images are quite different for different users. This is a typical scenario with new labels with heterogeneous label distributions amongst users.

Generally speaking, many different types of problems relevant to many different industries will have local users 104 that have new, unseen heterogeneous labels. For instance, let us assume that the local users are telecommunications operators. Quite often, the operators have different data distributions and different labels with them. Some of the labels are common between these operators, while some labels tend to be very unique or more specialized, and catered to certain operators only, or to operators within certain regions. Furthermore, new and unseen labels can occur due to a variety of reasons depending on the specific operator, the operator's region, etc. Embodiments herein provide, in such situations, for a common and unified model in the federated learning framework since the operator typically will not transfer data due to privacy concerns and can gather only insights.

One challenge in addressing this problem is to combine these different local labels, including existing heterogeneous labels and new unseen labels, and models into a single global model. This is not straight forward since the local users do not have the label distribution of other local users visible in them, and local models are usually built to describe only the local labels they have. Hence, there is a need for a method which can combine these local models to a global model.

In some embodiments, a public dataset may be made available to all the local users and the global user. The public dataset contains data related to the union of all the labels across all the local users. Suppose, for example, that the label set for User 1 is $U_1$, User 2 is $U_2$, ..., and User P is $U_P$, the union of all the labels forms the global user label set $\{U_1 \cup U_2 \cup U_3 ... \cup U_P\}$. Multiple local computing devices include different model architectures in each federated learning (FL) iteration, and the incoming data in each local computing device includes data with new classes and labels in some FL iterations, with either unique or overlapping classes in each FL iteration. An initial public dataset with label set consisting of all labels accessible across all local user computing devices is established, and the dataset is updated when new classes (labels) are incoming over different iterations. This public dataset is used as the test set and it is not exposed during FL iterations to the local models for consistency to prevail while testing. There are cases when no local user reports new classes, or any (or all) local user reports new classes. There are also considerations regarding whether the reported labels of the new classes from local users are trustworthy or not.

In an exemplary embodiment, the new labels streaming in to the local users are not present in public dataset. All the local users have an idea of all the labels other local users have.

Anonymized Data Impressions

Embodiments disclosed herein enable detection of similar labels across different local users in a federated learning setting without the knowledge of the data. Embodiments disclosed herein enable constructing the anonymized data without actually transferring data and identifying similarities on the anonymized data. In some embodiments, anonymized Data Impressions are generated using zero-shot learning to compute the anonymized data.

In some embodiments, a ML model M is provided, which relates between the input X and output y, where $X \in R^{M \times N}$ is set of the features available, and $y \in R^M$, which represents the dimension of the labels (classes) space for the M samples. As used in exemplary embodiments described herein, features may be, for example, in an image of a dog, cat, elephant, etc., characteristics from patterns, colors, shapes, texture, sizes, etc., such as, fur, hair, brown, gray, angular, smooth, etc. In some applications of the methods disclosed herein, such as, for example, for normal data based classification, the features can be a set of sensors data which can be used for classification. An anonymized feature set X*, which has same properties of X, can be created by, for example, utilizing the following exemplary algorithm, which is explained in further detail below with reference to "Sampling the Softmax values" and "Creating Data Impressions."

---

**Algorithm**

---

**Input:** Public Dataset $D_0(x_0, y_0)$, Private Datasets $D_m^i$, Total users $M$, Total iterations $I$, LabelSet $l_m$ for each user

**Output:** Trained Model scores $f_G^I$

Initialize $f_G^0 = 0$ (Global Model Scores)

**for** $i = 0$ to $I$ **do**

  **for** $m = 0$ to $M$ **do**

    **Build:** Model $D_m^i$ and predict $f_{D_m^i}(x_0)$

    **Local Update (<u>at local computing device</u>):**

    **Choice 1: New classes are not reported**

    $f_{D_m^i}(x_0) = f_G^I\left(x_0^{l_m}\right) + \alpha f_{D_m^i}(x_0)$, where $f_G^I\left(x_0^{l_m}\right)$ are the global scores of labelset $l_m$ with $m^{th}$ user, $\alpha = \frac{len(D_m^i)}{len(D_0)}$

    **Choice 2: New classes are reported**

    Train a new model on public data $D_0$ and new data $D_m^i$ together. Send weights of the last layer ($W_m^i$) to global user.

  **end for**

  **Global Update (<u>at central computing device</u>):**

  **Choice 1: No user reports new classes**

  Update label wise

  $f_G^{i+1} = \sum_{m=1}^{M} \beta_m f_{D_m^i}(x_0)$, where

---

$$\beta_m = \begin{cases} 1, & \textit{If labels are unique} \\ acc(f_{D_m^{i+1}}(x_0)), & \textit{If labels are unique} \end{cases}$$

where $acc(f_{D_m^{i+1}}(x_0))$ is the accuracy function, defined by the ratio of correctly classified samples to the total samples for the given local model

**Choice 2: Any user reports new classes**

Create *Data Impressions (DI)* for each user $m$ with weights $W_m^i$.

**Choice 2₁: Global user trusts new labels of all users**

Average *DI* of all users to create common DI for each new label $X^i = \sum_{m \in M_{S_k}} X_m^i$, where $M_{S_k}$ is set of users with label $k$.

**Choice 2₂: Global user does not trust new labels of all users**

1. Perform *k-medoids clustering* on combined *DI* across new classes of all users, and arrive at number of labels $l_{new}$.

2. With new labels $l_{new}$, we compute *DI* using Choice 2₁.

At the end of Choice 2₁ and Choice 2₂, we ask the users to report model scores on new public dataset $D_{new} = D_0 \cup X^i$, and add $l_{new}$ to $l_m$.

**end for**

---

Sampling the Softmax values

In some embodiments, softmax values from a Dirichlet distribution are sampled. The distribution may be controlled by using a weights matrix, such as, for example, a class/label similarity matrix. The class similarity matrix includes information on how similar the classes (labels) are to each other. If the classes (labels) are similar, the softmax values will likely be concentrated uniformly over these classes (labels) and vice-versa.

The class similarity matrix is obtained by considering the weights of the last layer of the each local model. This weights matrix can be used for both the local and global ML models. In general, any ML model may have the final layer as a fully connected layer with a softmax non-linearity. If the classes (labels) are similar, there will be similar weights between connection of previous layer to the nodes of the classes (labels). The class similarity matrix (C) can be constructed, for example, as:

$$C(i,j) = \frac{\mathbf{w}_i^T \mathbf{w}_j}{\|\mathbf{w}_i\|\|\mathbf{w}_j\|}$$

where $w_i$ is vector of the weights connecting the previous layer nodes to the class node i and $C \in R^{K \times K}$ is the similarity matrix for K classes in the data.

With the class similarity matrix constructed, the next step is to sample the softmax values as:

$$\text{Softmax} = \text{Dir} (K, C)$$

where Dir is a Dirichlet distribution function and C is concentration parameter which controls the spread of the softmax values over classes in the data.

Creating Data Impressions

In some embodiments, $Y^k = [y_1^k, y_2^k, ...., y_N^k] \in R^{K \times N}$, K is the number of classes (labels) in the data, N softmax vectors corresponding to class (label) k, sampled from Dirichlet distribution constructed from previous step - i.e., sampling of the softmax values. Using these softmax values, the input data features (data impressions) are computed by solving the following optimization problem using the model M and sampled softmax values $Y^k$.

$$X^* = \arg \min_X L_{CE} (y_i^k, M(X))$$

To solve the optimization problem, initialize the input X to be random input and iterate until the cross-entropy loss ($L_{CE}$) change is less than a significant value between two iterations. The process is repeated for each of the K classes (labels), and data impressions for each class (label) are obtained, which represent anonymized data features for each class (label). For example, in an exemplary embodiment applying the methods disclosed herein to an image classification problem, the anonymized data features can be a set of anonymized (i.e., look alike) image features which are responsible for classification. In another example, in an exemplary embodiment applying the methods disclosed herein to a sensor data classification problem, the anonymized data features can be a set of anonymized sensor data which are responsible for classification.

Embodiments of the disclosed methods enable handling of heterogeneous labels as well as heterogeneous models in federated learning, which is very useful in applications where users are participating from different organizations which have multiple and disparate labels. A further advantage of the disclosed methods is that they can handle different distributions of samples across all the users, which can be common in any application.

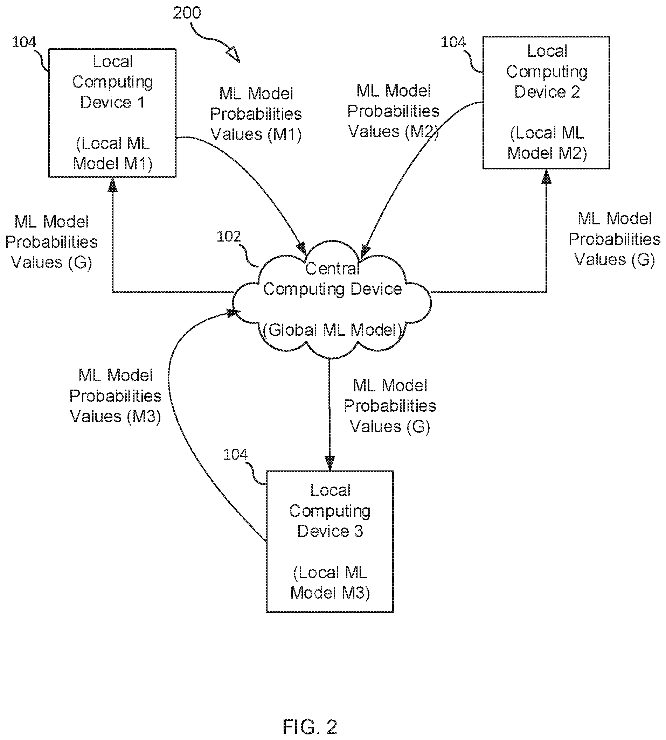

Application of the forgoing steps for creating anonymized data impressions, including sampling softmax values and creating data impressions, and the exemplary algorithm provided, are further discussed with reference to FIG. 2, FIG. 3A, FIG. 3B, FIG. 4A, FIG. 4B, FIG. 5A, and FIG. 5B.

FIG. 2 illustrates a system 300 according to some embodiments. System 200 includes three users 104, labeled as "Local Computing Device 1", "Local Computing Device 2", and "Local Computing Device 3". These users may have heterogeneous labels, including new, unseen labels streaming in during different iterations. Continuing with the example image classification described above, User 1, Local Computing Device 1 may have labels from two classes -- 'Cat' and 'Dog'; User 2, Local Computing Device 2 may have labels from two classes -- 'Dog' and 'Pig'; and User 3, Local Computing Device 3 may have labels from two classes -- 'Cat' and 'Pig' -- in the first iteration of federated learning. In the second or following iterations, in this example, a new class exists with label 'Sheep' for User 1, Local Computing Device 1 and a new class exists with label 'Elephant' for User 3, Local Computing Device 3.

As illustrated, each of the Users, Local Computing Devices 104, include a Local ML Model. User 1, Local Computing Device 1 includes Local ML Model M1; User 2, Local Computing Device 2 includes Local ML Model M2; and User 3, Local Computing Device 3 includes Local ML Model M3. Each of the Local ML Models M1, M2, and M3 may be the same or different model types (a CNN model, an Artificial Neural Network (ANN) model, and an RNN model).

System 200 also includes a Central Computing Device 102, which includes a Global ML Model.

As described above, for a given iteration of federated learning, new labels (classes) may stream into users, local computing devices 104. If labels (classes) are not reported, we train the new labels (classes) along with the public dataset, and send the new model weights to the global user. If user reports new labels (classes), we cluster the averaged Data Impressions of each new label (class) using a simple k-medoids clustering algorithm, and use the elbow operation to determine the optimal number of clusters k. Considering the new clusters k as new labels (classes), we compute the Data Impressions for each new label (class), and again add the new Data Impressions to the public dataset, and new labels (classes) to the public label (class) set.

As shown, there are three different local devices which include different labels and architectures. Interaction happens between a central global ML model, which exists in the central computing device 102, and the users are local computing devices 104, e.g., configurations with embedded systems or mobile phones.

The ML model training for each local user of a local computing device user and transfer of ML model probabilities values to global user of a central computing device 102 is capable of running on a low-resource constrained device, such as, for example, one having ~256MB RAM. This makes the federated learning methods according to embodiments described herein suitable for running on many types of local client computing devices, including contemporary mobile/embedded devices such as smartphones. Advantageously, the federated learning methods according to embodiments described herein are not computationally intensive for local users and local computing devices, and can be implemented in low-power constrained devices.

Example

We collected a public dataset of all labels in the data and made it available to all the users - here, telecommunications operators. The public dataset consisted of an alarms dataset corresponding to three telecommunications operators. For the example, the first operator has three labels $\{l_1, l_2, l_3\}$, the second operator has three labels $\{l_2, l_3, l_4\}$, and the third operator has three labels $\{l_2, l_4, l_5\}$. The dataset has similar features, but has different patterns and different labels. In this example, the first operator has incoming data with a new label $l_6$, while the third operator has incoming data with a new label $l_7$. Due to few geographical and technological innovation from one operator, there could be new labels from that operator, which is unseen by that operator previously, or by the other operator or the global model. The objective for each of the users is to classify the alarms as either a true alarm or a false alarm based on their respective features.

The users have the choice of building their own models. In this example, the users are given the choice of building a Convolutional Neural Network (CNN) model. However, rather than a conventional federated learning setting, the choice of designing the architecture - i.e., the different number of layers and filters in each layer - is given to the users.

As indicated, in this example, there are three different operators. The three different operators choose to fit three different CNN models. Based on the dataset, operator 1 chooses to fit a three-layer CNN with 32, 64 and 32 filters in each layer respectively. Similarly, operator 2 chooses to fit a two-layer ANN model with 32 and 64 filters in each layer respectively. The third operator chooses to fit a two-layered Recurrent Neural Network (RNN) with 32 and 50 units each. These models are chosen based on the nature of data and different iterations.

In this case, the global model is constructed as follows. The softmax probabilities of the local model are computed on the subset of public data to which the labels in the local model have access to. Data Impressions of new data for the respective new labels in the global model are created. The respective new label data is added to the public dataset after clustering across just the new label data. Now, the new label set includes $l_6$ and $l_7$ added to the initial label set. The label-based averaging of all distributions of all local softmax probabilities are computed and sent back to the local users. These steps repeat for multiple iterations of the federated learning model.

The final average accuracies obtained for the three local models are 82%, 88% and 75%. After the global model is constructed, the final accuracies obtained at the three local models are 85%, 93% and 79%. In this way, we evaluate that the federated learning model and methods disclosed herein are effective and yield better results, when compared to the local models operating by themselves. The model is run for 50 iterations and we report these accuracies across three different experimental trials, and we average the accuracies.

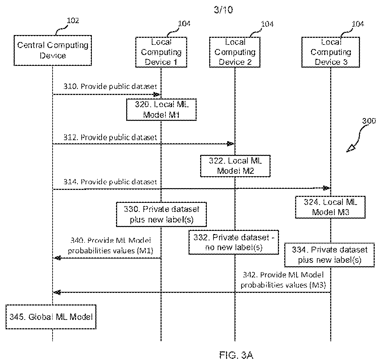

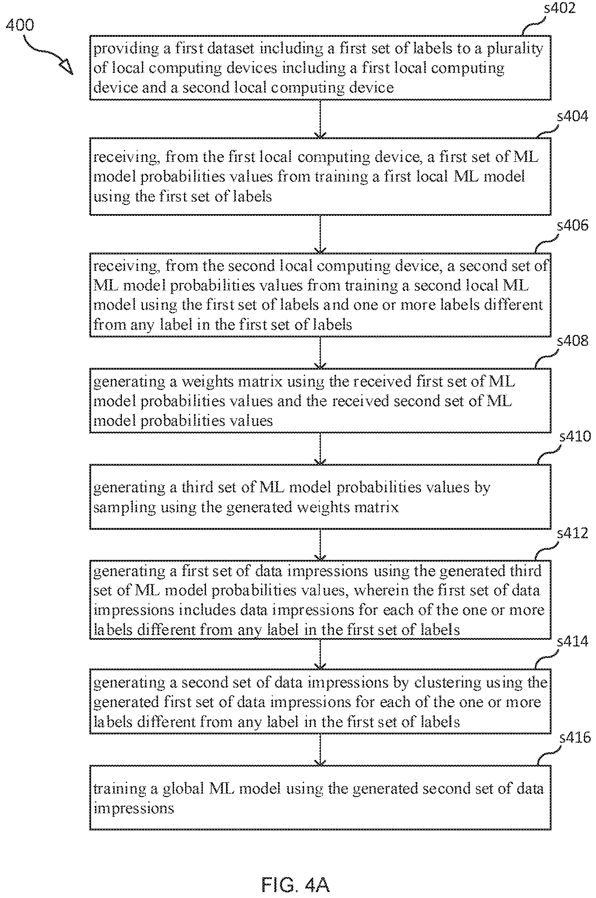

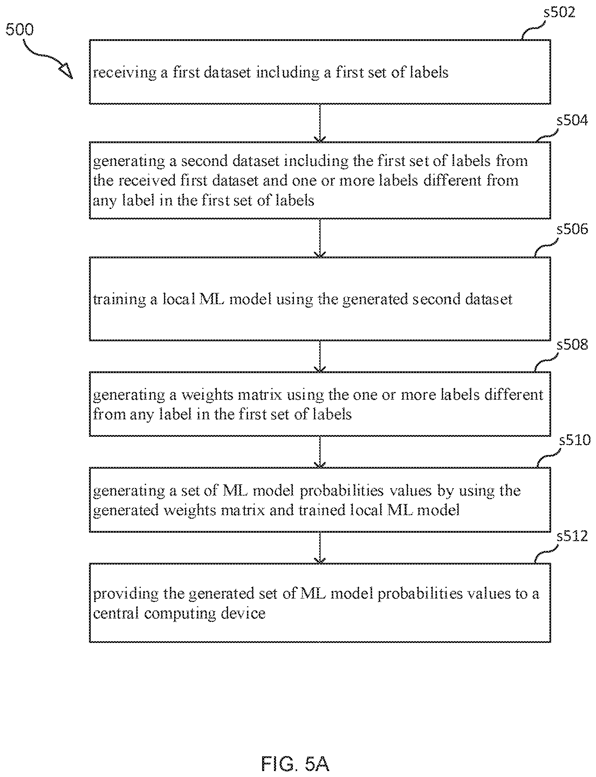

FIG. 3A illustrates a message diagram 300 according to an embodiment. Local users or client computing devices 104 (three local users are shown) and central computing device 102 communicate with each other. The central computing device 102 first provides a public dataset to each of the local computing devices 104 at 310, 312, and 314. Each of the local computing devices 104 have a local ML model - Local Computing Device 1 has Local ML Model M1 320; Local Computing Device 2 has Local ML Model M2 322; and Local Computing Device 3 has Local ML Model M3 324. Each of the local computing devices 104 also have a private dataset - Local Computing Device 1 has Private Dataset plus new label(s) 330; Local Computing Device 2 has Private Dataset - no new label(s) 332; and Local Computing Device 3 has Private Dataset plus new label(s) 334. As described above with reference to FIG. 2 and below in further detail with reference to FIG. 5A, each of the local computing devices use the received public dataset and their own private dataset, including with new label(s) in the case of Local Computing Device 1 and Local Computing Device 3, to train their local ML models and generate a weights matrix and model probabilities values, which are provided to the central computing device 102. Local Computing Device 1 provides ML Model probabilities values (M1) to the Central Computing Device at step 340, and Local Computing Device 3 provides ML Model probabilities values (M3) to the Central Computing Device at step 342. As explained below in further detail with reference to FIG. 4A, after receiving the ML model probabilities values from the local computing devices, the central computing device generates a weights matrix using the received ML model probabilities values, performs sampling using the generated weights matrix, and generates data impressions, including data impressions for the new labels, by clustering. The global ML model 345 is trained using the generated data impressions.

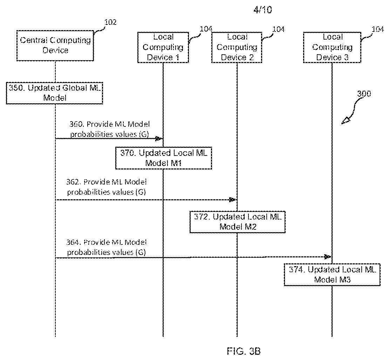

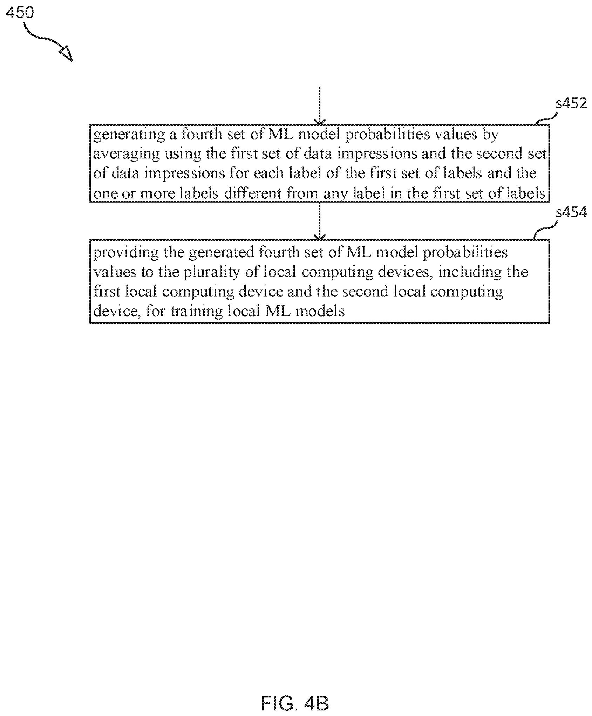

FIG. 3B illustrates further messages for the message diagram 300 according to an embodiment. As indicated with reference to FIG. 3A, the global ML model 345 is trained using the generated data impressions, which includes the new labels. The trained global ML model is the Updated Global ML Model 350 shown in FIG. 3B for the Central Computing Device 102. As explained below in further detail with reference to Fig. 4B, the central computing device generates ML model probabilities values by averaging using the generated data impressions, including data impressions for the new labels. The central computing device 102 provides these ML model probabilities values to each of the local computing devices 104 at 360, 362, and 364. Each of the local computing devices 104 use the received ML model probabilities values to train and, thereafter, Local Computing Device 1 has Updated Local ML Model M1 370; Local Computing Device 2 has Updated Local ML Model M2 372; and Local Computing Device 3 has Updated Local ML Model M3 374.

FIG. 4A illustrates a flow chart according to an embodiment. Process 400 is a method for distributed machine learning (ML) at a central computing device. Process 400 may begin with step s402.

Step s402 comprises providing a first dataset including a first set of labels to a plurality of local computing devices including a first local computing device and a second local computing device.

Step s404 comprises receiving, from the first local computing device, a first set of ML model probabilities values from training a first local ML model using the first set of labels.

Step s406 comprises receiving, from the second local computing device, a second set of ML model probabilities values from training a second local ML model using the first set of labels and one or more labels different from any label in the first set of labels.

Step s408 comprises generating a weights matrix using the received first set of ML model probabilities values and the received second set of ML model probabilities values.

Step s410 comprises generating a third set of ML model probabilities values by sampling using the generated weights matrix.

Step s412 comprises generating a first set of data impressions using the generated third set of ML model probabilities values, wherein the first set of data impressions includes data impressions for each of the one or more labels different from any label in the first set of labels.

Step s414 comprises generating a second set of data impressions by clustering using the generated first set of data impressions for each of the one or more labels different from any label in the first set of labels.

Step s416 comprises training a global ML model using the generated second set of data impressions.

FIG. 4B illustrates a flow chart according to an embodiment. In some embodiments, process 400 further includes the steps of process 450. Process 450 may begin with step s452.

Step s452 comprises generating a fourth set of ML model probabilities values by averaging using the first set of data impressions and the second set of data impressions for each label of the first set of labels and the one or more labels different from any label in the first set of labels.

Step s454 comprises providing the generated fourth set of ML model probabilities values to the plurality of local computing devices, including the first local computing device and the second local computing device, for training local ML models.

In some embodiments, the received first set of ML model probabilities values and the received second set of ML model probabilities values are one of: Softmax values, sigmoid values, and Dirichlet values. In some embodiments, sampling using the generated weights matrix is according to Softmax values and a Dirichlet distribution function. In some embodiments, the generated weights matrix is a class similarity matrix. In some embodiments, clustering using the generated first set of data impressions for each of the one or more labels different from any label in the first set of labels is according to a k-medoids clustering algorithm and uses the elbow method to determine the number of clusters k.

FIG. 5A illustrates a flow chart according to an embodiment. Process 500 is a method for distributed machine learning (ML) learning at a local computing device. Process 500 may begin with step s502.

Step s502 comprises receiving a first dataset including a first set of labels.

Step s504 generating a second dataset including the first set of labels from the received first dataset and one or more labels different from any label in the first set of labels.

Step s506 training a local ML model using the generated second dataset.

Step s508 generating a weights matrix using the one or more labels different from any label in the first set of labels.

Step s510 generating a set of ML model probabilities values by using the generated weights matrix and trained local ML model.

Step s512 providing the generated set of ML model probabilities values to a central computing device.

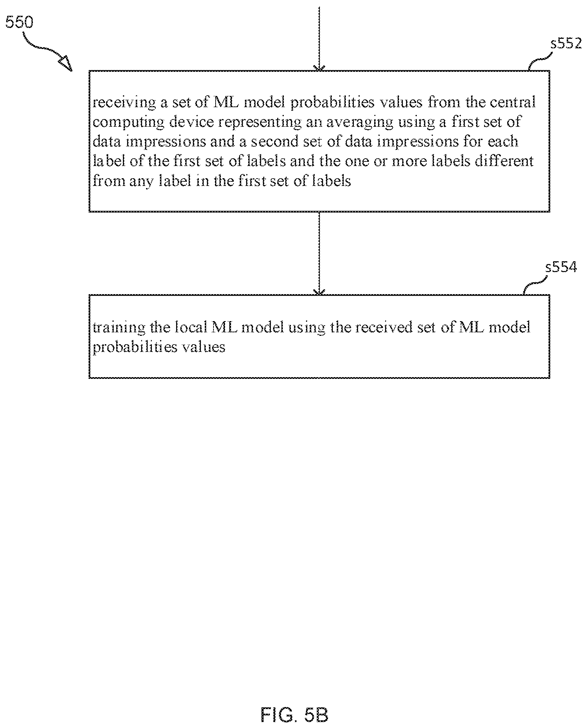

FIG. 5B illustrates a flow chart according to an embodiment. In some embodiments, process 500 further includes the steps of process 550. Process 550 may begin with step s552.

Step s552 comprises receiving a set of ML model probabilities values from the central computing device representing an averaging using a first set of data impressions and a second set of data impressions for each label of the first set of labels and the one or more labels different from any label in the first set of labels.

Step s554 comprises training the local ML model using the received set of ML model probabilities values.

In some embodiments, the received first data set is a public dataset and the generated second dataset is a private dataset. In some embodiments, the local ML model is one of: a convolutional neural network (CNN), a artificial neural network (ANN), and a recurrent neural network (RNN).

In some embodiments, the plurality of local computing devices, including the first local computing device and the second local computing device, comprises a plurality of radio network nodes which are configured to classify an alarm type using the trained local ML models. In some embodiments, the plurality of local computing devices, including the first local computing device and the second local computing device, comprises a plurality of wireless sensor devices which are configured to classify an alarm type using the trained local ML models

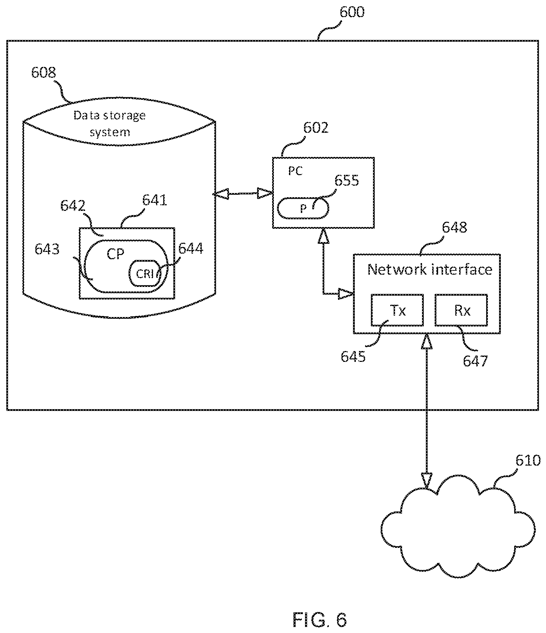

FIG. 6 is a block diagram of an apparatus 600 (e.g., a local computing device 104 and/or central computing device 102), according to some embodiments. As shown in FIG. 6, the apparatus may comprise: processing circuitry (PC) 602, which may include one or more processors (P) 655 (e.g., a general purpose microprocessor and/or one or more other processors, such as an application specific integrated circuit (ASIC), field-programmable gate arrays (FPGAs), and the like); a network interface 648 comprising a transmitter (Tx) 645 and a receiver (Rx) 647 for enabling the apparatus to transmit data to and receive data from other computing devices connected to a network 610 (e.g., an Internet Protocol (IP) network) to which network interface 648 is connected; and a local storage unit (a.k.a., "data storage system") 608, which may include one or more non-volatile storage devices and/or one or more volatile storage devices. In embodiments where PC 602 includes a programmable processor, a computer program product (CPP) 641 may be provided. CPP 641 includes a computer readable medium (CRM) 642 storing a computer program (CP) 643 comprising computer readable instructions (CRI) 644. CRM 642 may be a non-transitory computer readable medium, such as, magnetic media (e.g., a hard disk), optical media, memory devices (e.g., random access memory, flash memory), and the like. In some embodiments, the CRI 644 of computer program 643 is configured such that when executed by PC 602, the CRI causes the apparatus to perform steps described herein (e.g., steps described herein with reference to the flow charts). In other embodiments, the apparatus may be configured to perform steps described herein without the need for code. That is, for example, PC 602 may consist merely of one or more ASICs. Hence, the features of the embodiments described herein may be implemented in hardware and/or software.

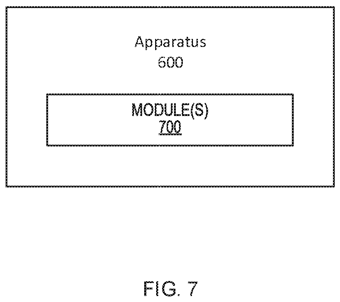

FIG. 7 is a schematic block diagram of the apparatus 600 according to some other embodiments. The apparatus 600 includes one or more modules 700, each of which is implemented in software. The module(s) 700 provide the functionality of apparatus 600 described herein (e.g., the steps herein, e.g., with respect to FIGS. 2, 3, 4A, 4B, 5A, 5B).

While various embodiments of the present disclosure are described herein, it should be understood that they have been presented by way of example only, and not limitation. Thus, the breadth and scope of the present disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (400) for federated learning at a central computing device (102) , the method comprising:

   providing (s402) a first dataset including a first set of labels to a plurality of local computing devices including a first local computing device and a second local computing device;
   receiving (s404), from the first local computing device, a first set of machine learning, ML, model probabilities values from training a first local ML model using the first set of labels;
   receiving (s406), from the second local computing device, a second set of ML model probabilities values from training a second local ML model using the first set of labels and one or more labels different from any label in the first set of labels;
   generating (s408) a weights matrix using the received first set of ML model probabilities values and the received second set of ML model probabilities values, wherein the received first set of ML model probabilities values and the received second set of ML model probabilities values are one of: Softmax values, sigmoid values, and Dirichlet values;
   generating (s410) a third set of ML model probabilities values by sampling using the generated weights matrix;
   generating (s412) a first set of data impressions using the generated third set of ML model probabilities values, wherein the first set of data impressions includes data impressions for each of the one or more labels different from any label in the first set of labels wherein data impressions represent anonymized data features for each of the one or more labels;
   generating (s414) a second set of data impressions by clustering using the generated first set of data impressions for each of the one or more labels different from any label in the first set of labels; and
   training (s416) a global ML model using the generated second set of data impressions.

2. The method of claim 1, further comprising:

   generating a fourth set of ML model probabilities values by averaging using the first set of data impressions and the second set of data impressions for each label of the first set of labels and the one or more labels different from any label in the first set of labels,; and
   providing the generated fourth set of ML model probabilities values to the plurality of local computing devices, including the first local computing device and the second local computing device, for training local ML models.

3. The method of any one of claims 1-2, wherein the generated weights matrix is a class similarity matrix and the class similarity matrix is generated according to:

$$C(i,j) = \frac{\mathbf{w}_i^T \mathbf{w}_j}{||\mathbf{w}_i||\,||\mathbf{w}_j||}$$

where $w_i$ is vector of the weights connecting the previous layer nodes to the class node i and $C \in R^{K \times K}$ is the similarity matrix for K labels in the received first set of ML model probabilities values and the received second set of ML model probabilities values.

4. The method of any one of claims 1-3, wherein sampling using the generated weights matrix is according to:

$$\text{Softmax} = \text{Dir}\,(K,\,C)$$

where Dir is a Dirichlet distribution function and C is concentration parameter which controls the spread of the Softmax values over labels in the received first set of ML model probabilities values and the received second set of ML model probabilities values.

5. The method of any one of claims 1-4, wherein clustering using the generated first set of data impressions for each of the one or more labels different from any label in the first set of labels is according to a k-medoids clustering algorithm and uses the elbow method to determine the number of clusters k.

6. A method (500) for federated learning at a local computing device (104) , the method comprising:

receiving (s502) a first dataset including a first set of labels;
generating (s504) a second dataset including the first set of labels from the received first dataset and one or more labels different from any label in the first set of labels;
training (s506) a local machine learning, ML, model using the generated second dataset;
generating (s508) a weights matrix using the one or more labels different from any label in the first set of labels;
generating (s510) a set of ML model probabilities values by using the generated weights matrix and trained local ML model;
providing (s512) the generated set of ML model probabilities values to a central computing device, wherein the generated set of ML model probabilities values are one of: Softmax values, sigmoid values, and Dirichlet values;
receiving (s552) a set of ML model probabilities values from the central computing device representing an averaging using a first set of data impressions and a second set of data impressions for each label of the first set of labels and the one or more labels different from any label in the first set of labels wherein data impressions represent anonymized data features for each of the one or more labels; and
training (s554) the local ML model using the received set of ML model probabilities values.

7. The method of claim 6, wherein the received first data set is a public dataset and the generated second dataset is a private dataset.

8. The method of any one of claims 6-7, wherein the local ML model is one of: a convolutional neural network, CNN, a artificial neural network, ANN, and a recurrent neural network, RNN.

9. The method of any one of claims 1-8, wherein the plurality of local computing devices, including the first local computing device and the second local computing device, comprises a plurality of radio network nodes which are configured to classify an alarm type using the trained local ML models, or wherein the plurality of local computing devices, including the first local computing device and the second local computing device, comprises a plurality of wireless sensor devices which are configured to classify an alarm type using the trained local ML models

10. A central computing device (102) comprising:

a memory; and
a processor coupled to the memory, wherein the processor is configured to perform a method (400) for federated learning to :

provide (s402) a first dataset including a first set of labels to plurality of local computing devices including a first local computing device and a second local computing device;

receive(s404), from the first local computing device, a first set of machine learning, ML, model probabilities values from training a first local ML model using the first set of labels;

receive(s406), from the second local computing device, a second set of ML model probabilities values from training a second local ML model using the first set of labels and one or more labels different from any label in the first set of labels;

generate a weights matrix using the received first set of ML model probabilities values and the received second set of ML model probabilities values , wherein the received first set of ML model probabilities values and the received second set of ML model probabilities values are one of: Softmax values, sigmoid values, and Dirichlet values;

generate a third set of ML model probabilities values by sampling using the generated weights matrix;

generate a first set of data impressions using the generated third set of ML model probabilities values, wherein the first set of data impressions includes data impressions for each of the one or more labels different from any label in the first set of labels wherein data impressions represent anonymized data features for each of the one or more labels;

generate a second set of data impressions by clustering using the generated first set of data impressions for each of the one or more labels different from any label in the first set of labels; and

train a global ML model using the generated second set of data impressions.

11. The central computing device of claim 10, the central computing device being configured to perform the method according to any one of claims 1- 5.

12. A local computing device (104) comprising:

a memory;

a processor coupled to the memory, wherein the processor is configured to perform a method for federated learning to:

receive a first dataset including a first set of labels;

generate a second dataset including the first set of labels from the received first dataset and one or more labels different from any label in the first set of labels;

train a local machine learning, ML model using the generated second dataset;

generate a weights matrix using the one or more labels different from any label in the first set of labels;

generate a set of model probabilities values by using the generated weights matrix and trained local ML model;

provide the generated set of model probabilities values to a central computing device, wherein the generated set of ML model probabilities values are one of: Softmax values, sigmoid values, and Dirichlet values;

receive a set of ML model probabilities values from the central computing device representing an averaging using a first set of data impressions and a second set of data impressions for each label of the first set of labels and the one or more labels different from any label in the first set of labels wherein data impressions represent anonymized data features for each of the one or more labels; and

train the local ML model using the received set of ML model probabilities values.

13. The local computing device of claim 12, the local computing device being configured to perform the method according to any one of claims 7 - 8.

**Patentansprüche**

1. Verfahren (400) zum föderierten Lernen auf einer zentralen Rechenvorrichtung (102), wobei das Verfahren umfasst:

Bereitstellen (s402) eines ersten Datensatzes, der einen ersten Satz von Labels beinhaltet, an eine Mehrzahl von lokalen Rechenvorrichtungen, die eine erste lokale Rechenvorrichtung und eine zweite lokale Rechenvorrichtung beinhalten;

Empfangen (s404) eines ersten Satzes von Wahrscheinlichkeitswerten eines Modells für maschinelles Lernen, ML, von der ersten lokalen Rechenvorrichtung aus dem Trainieren eines ersten lokalen ML-Modells unter Verwendung des ersten Satzes von Labels;

Empfangen (s406) eines zweiten Satzes von ML-Modell-Wahrscheinlichkeitswerten von der zweiten lokalen Rechenvorrichtung aus dem Trainieren eines zweiten lokalen ML-Modells unter Verwendung des ersten Satzes von Labels und eines oder mehrerer Labels, das sich von einem beliebigen Label in dem ersten Satz von Labels unterscheiden;

Erzeugen (s408) einer Gewichtsmatrix unter Verwendung des empfangenen ersten Satzes von ML-Modell-Wahrscheinlichkeitswerten und des empfangenen zweiten Satzes von ML-Modell-Wahrscheinlichkeitswerten, wobei der empfangene erste Satz von ML-Modell-Wahrscheinlichkeitswerten und der empfangene zweite Satz von ML-Modellwahrscheinlichkeitswerten eines sind aus: Softmax-Werten, Sigmoid-Werten und Dirichlet-Werten;

Erzeugen (s410) eines dritten Satzes von ML-Modell-Wahrscheinlichkeitswerten durch Stichprobenziehung unter Verwendung der erzeugten Gewichtsmatrix;

Erzeugen (s412) eines ersten Satzes von Datenimpressionen unter Verwendung des erzeugten dritten Satzes von ML-Modell-Wahrscheinlichkeitswerten, wobei der erste Satz von Datenimpressionen Datenimpressionen für jedes des einen oder der mehreren Labels beinhaltet, die sich von einem beliebigen Label in dem ersten Satz von Labels unterscheiden, wobei Datenimpressionen anonymisierte Datenmerkmale für jedes des einen oder der mehreren Labels darstellen;

Erzeugen (s414) eines zweiten Satzes von Datenimpressionen durch Clustern unter Verwendung des erzeugten ersten Satzes von Datenimpressionen für jedes des einen oder der mehreren Labels, die sich von einem beliebigen Label in dem ersten Satz von Labels unterscheiden; und

Trainieren (s416) eines globalen ML-Modells unter Verwendung des erzeugten zweiten Satzes von Datenimpressionen.

2. Verfahren nach Anspruch 1, ferner umfassend:

Erzeugen eines vierten Satzes von ML-Modell-Wahrscheinlichkeitswerten durch Mitteln unter Verwendung des ersten Satzes von Datenimpressionen und des zweiten Satzes von Datenimpressionen für jedes Label des ersten Satzes von Labels und des einen oder der mehreren Labels, die sich von einem beliebigen Label in dem ersten Satz von Labels unterscheiden,; und

Bereitstellen des erzeugten vierten Satzes von ML-Modellwahrscheinlichkeitswerten an die Mehrzahl von lokalen Rechenvorrichtungen, die die erste lokale Rechenvorrichtung und die zweite lokale Rechenvorrichtung beinhalten, um lokale ML-Modelle zu trainieren.

3. Verfahren nach einem der Ansprüche 1 bis 2, wobei die erzeugte Gewichtsmatrix eine Klassenähnlichkeitsmatrix ist und die Klassenähnlichkeitsmatrix erzeugt wird gemäß:

$$C(i,j) = \frac{\mathbf{w}_i^T \mathbf{w}_j}{||\mathbf{w}_i|| \, ||\mathbf{w}_j||}$$

wobei $w_i$ der Vektor von Gewichten ist, die die vorherigen Schichtknoten mit dem Klassenknoten $i$ verbinden, und $C \in \mathbb{R}^{K \times K}$ die Ähnlichkeitsmatrix für K Labels in dem empfangenen ersten Satz von ML-Modellwahrscheinlichkeitswerten und dem empfangenen zweiten Satz von ML-Modellwahrscheinlichkeitswerten ist.

4. Verfahren nach einem der Ansprüche 1 bis 3, wobei das Stichprobenziehen unter Verwendung der erzeugten Gewichtsmatrix erfolgt gemäß:

$$\texttt{Softmax = Dir (K, C)}$$

wobei Dir eine Dirichlet-Verteilungsfunktion ist und C ein Konzentrationsparameter ist, der die Verteilung der Softmax-Werte über Labels in dem empfangenen ersten Satz von ML-Modellwahrscheinlichkeitswerten und dem empfangenen zweiten Satz von ML-Modellwahrscheinlichkeitswerten steuert.

5. Verfahren nach einem der Ansprüche 1 bis 4, wobei das Clustern unter Verwendung des erzeugten ersten Satzes von Datenimpressionen für jedes des einen oder der mehreren Labels, die sich von einem beliebigen Label in dem ersten Satz von Labels unterscheiden, gemäß einem k-Medoids-Clustering-Algorithmus erfolgt und die Elbow-Methode verwendet wird, um die Anzahl von Clustern k zu ermitteln.

6. Verfahren (500) zum föderierten Lernen auf einer lokalen Rechenvorrichtung (104), wobei das Verfahren umfasst:

Empfangen (s502) eines ersten Datensatzes, der einen ersten Satz von Labels beinhaltet;

Erzeugen (s504) eines zweiten Datensatzes, der den ersten Satz von Labels beinhaltet, anhand des empfangenen ersten Datensatzes und eines oder mehrerer Labels, die sich von einem beliebigen Label in dem ersten Satz von Labels unterscheiden;

Trainieren (s506) eines lokalen Modells für maschinelles Lernen, ML, unter Verwendung des erzeugten zweiten Datensatzes;

Erzeugen (s508) einer Gewichtsmatrix unter Verwendung des einen oder der mehreren Labels, die sich von einem beliebigen Label in dem ersten Satz von Labels unterscheiden;

Erzeugen (s510) eines Satzes von ML-Modell-Wahrscheinlichkeitswerten unter Verwendung der erzeugten Gewichtsmatrix und des trainierten lokalen ML-Modells;

Bereitstellen (s512) des erzeugten Satzes von ML-Modellwahrscheinlichkeitswerten an eine zentrale Rechenvorrichtung, wobei der erzeugte Satz von ML-Modellwahrscheinlichkeitswerten eines ist aus: Softmax-Werten, Sigmoid-Werten und Dirichlet-Werten;

Empfangen (s552) eines Satzes von ML-Modellwahrscheinlichkeitswerten von der zentralen Rechenvorrichtung, der eine Mittelung unter Verwendung eines ersten Satzes von Datenimpressionen und eines zweiten Satzes von Datenimpressionen darstellt, für jedes Label des ersten Satzes von Labels und des einen oder der mehreren Labels, die sich von einem beliebigen Label in dem ersten Satz von Labels unterscheiden, wobei Datenimpressionen anonymisierte Datenmerkmale für jedes des einen oder der mehreren Labels darstellen; und

Trainieren (s554) des lokalen ML-Modells unter Verwendung des empfangenen Satzes von ML-Modell-Wahrscheinlichkeitswerten.

7. Verfahren nach Anspruch 6, wobei der empfangene erste Datensatz ein öffentlicher Datensatz ist und der erzeugte zweite Datensatz ein privater Datensatz ist.

8. Verfahren nach einem der Ansprüche 6 bis 7, wobei das lokale ML-Modell eines ist aus: einem faltenden neuronalen Netzwerk, CNN, einem künstlichen neuronalen Netzwerk, ANN, und einem rekurrenten neuronalen Netzwerk, RNN.

9. Verfahren nach einem der Ansprüche 1 bis 8, wobei die Mehrzahl von lokalen Rechenvorrichtungen, die die erste lokale Rechenvorrichtung und die zweite lokale Rechenvorrichtung beinhalten, eine Mehrzahl von Funknetzwerkknoten umfasst, die dazu konfiguriert sind, einen Alarmtyp unter Verwendung der trainierten lokalen ML-Modelle zu klassifizieren, oder wobei die Mehrzahl von lokalen Rechenvorrichtungen, die die erste lokale Rechenvorrichtung und die zweite lokale Rechenvorrichtung beinhaltet, eine Mehrzahl von drahtlosen Sensorvorrichtungen umfasst, die dazu konfiguriert sind, einen Alarmtyp unter Verwendung der trainierten lokalen ML-Modelle zu klassifizieren

10. Zentrale Rechenvorrichtung (102), die umfasst:

einen Speicher; und

einen Prozessor, der mit dem Speicher gekoppelt ist, wobei der Prozessor dazu konfiguriert ist, ein Verfahren (400) zum föderierten Lernen durchzuführen zum:

Bereitstellen (s402) eines ersten Datensatzes, der einen ersten Satz von Labels beinhaltet, an eine Mehrzahl von lokalen Rechenvorrichtungen, die eine erste lokale Rechenvorrichtung und eine zweite lokale Rechenvorrichtung beinhalten;

Empfangen (s404) eines ersten Satzes von Wahrscheinlichkeitswerten eines Modells für maschinelles Lernen, ML, von der ersten lokalen Rechenvorrichtung aus dem Trainieren eines ersten lokalen ML-Modells unter Verwendung des ersten Satzes von Labels;

Empfangen (s406) eines zweiten Satzes von ML-Modell-Wahrscheinlichkeitswerten von der zweiten lokalen Rechenvorrichtung aus dem Trainieren eines zweiten lokalen ML-Modells unter Verwendung des ersten Satzes von Labels und eines oder mehrerer Labels, das sich von einem beliebigen Label in dem ersten Satz von Labels unterscheiden;

Erzeugen einer Gewichtsmatrix unter Verwendung des empfangenen ersten Satzes von ML-Modell-Wahrscheinlichkeitswerten und des empfangenen zweiten Satzes von ML-Modell-Wahrscheinlichkeitswerten, wobei der empfangene erste Satz von ML-Modell-Wahrscheinlichkeitswerten und der empfangene zweite Satz von ML-Modellwahrscheinlichkeitswerten eines sind aus: Softmax-Werten, Sigmoid-Werten und Dirichlet-Werten;

Erzeugen eines dritten Satzes von ML-Modell-Wahrscheinlichkeitswerten durch Stichprobenziehung unter Verwendung der erzeugten Gewichtsmatrix;

Erzeugen eines ersten Satzes von Datenimpressionen unter Verwendung des erzeugten dritten Satzes von ML-Modell-Wahrscheinlichkeitswerten, wobei der erste Satz von Datenimpressionen Datenimpressionen für jedes des einen oder der mehreren Labels beinhaltet, die sich von einem beliebigen Label in dem ersten Satz von Labels unterscheiden, wobei Datenimpressionen anonymisierte Datenmerkmale für jedes des einen oder der mehreren Labels darstellen;

Erzeugen eines zweiten Satzes von Datenimpressionen durch Clustern unter Verwendung des erzeugten ersten Satzes von Datenimpressionen für jedes des einen oder der mehreren Labels, die sich von einem beliebigen Label in dem ersten Satz von Labels unterscheiden; und

Trainieren eines globalen ML-Modells unter Verwendung des erzeugten zweiten Satzes von Datenimpressionen.

**11.** Zentrale Rechenvorrichtung nach Anspruch 10, wobei die zentrale Rechenvorrichtung dazu konfiguriert ist, das Verfahren nach einem der Ansprüche 1 bis 5 durchzuführen.

**12.** Lokale Rechenvorrichtung (104), die umfasst:

einen Speicher;

einen Prozessor, der mit dem Speicher gekoppelt ist, wobei der Prozessor dazu konfiguriert ist, ein Verfahren zum föderierten Lernen durchzuführen zum:

Empfangen eines ersten Datensatzes, der einen ersten Satz von Labels beinhaltet;

Erzeugen eines zweiten Datensatzes, der den ersten Satz von Labels beinhaltet, anhand des empfangenen ersten Datensatzes und eines oder mehrerer Labels, die sich von einem beliebigen Label in dem ersten Satz von Labels unterscheiden;

Trainieren eines lokalen Modells für maschinelles Lernen, ML, unter Verwendung des erzeugten zweiten Datensatzes;

Erzeugen einer Gewichtsmatrix unter Verwendung des einen oder der mehreren Labels, die sich von einem beliebigen Label in dem ersten Satz von Labels unterscheiden;

Erzeugen eines Satzes von ML-Modell-Wahrscheinlichkeitswerten unter Verwendung der erzeugten Gewichtsmatrix und des trainierten lokalen ML-Modells;

Bereitstellen des erzeugten Satzes von Modellwahrscheinlichkeitswerten an eine zentrale Rechenvorrichtung, wobei der erzeugte Satz von ML-Modellwahrscheinlichkeitswerten eines ist aus: Softmax-Werten, Sigmoid-Werten und Dirichlet-Werten;

Empfangen eines Satzes von ML-Modellwahrscheinlichkeitswerten von der zentralen Rechenvorrichtung, der eine Mittelung unter Verwendung eines ersten Satzes von Datenimpressionen und eines zweiten Satzes von Datenimpressionen darstellt, für jedes Label des ersten Satzes von Labels und des einen oder der mehreren Labels, die sich von einem beliebigen Label in dem ersten Satz von Labels unterscheiden, wobei Datenimpressionen anonymisierte Datenmerkmale für jedes des einen oder der mehreren Labels darstellen; und

Trainieren des lokalen ML-Modells unter Verwendung des empfangenen Satzes von ML-Modell-Wahrscheinlichkeitswerten.

**13.** Lokale Rechenvorrichtung nach Anspruch 12, wobei die lokale Rechenvorrichtung dazu konfiguriert ist, das Verfahren nach einem der Ansprüche 7 bis 8 durchzuführen.

## Revendications

**1.** Procédé (400) d'apprentissage fédéré au niveau d'un dispositif informatique central (102), le procédé comprenant :

la fourniture (s402) d'un premier ensemble de données incluant un premier ensemble d'étiquettes à une pluralité de dispositifs informatiques locaux incluant un premier dispositif informatique local et un deuxième dispositif informatique local ;

la réception (s404), en provenance du premier dispositif informatique local, d'un premier ensemble de valeurs de probabilités de modèle d'apprentissage automatique, ML, issues de l'entraînement d'un premier modèle ML local utilisant le premier ensemble d'étiquettes ;

la réception (s406), en provenance du deuxième dispositif informatique local, d'un deuxième ensemble de valeurs de probabilités de modèle ML issues de l'entraînement d'un deuxième modèle ML local utilisant le premier ensemble d'étiquettes et une ou plusieurs étiquettes différentes de toute étiquette du premier ensemble d'étiquettes ;

la génération (s408) d'une matrice de poids en utilisant le premier ensemble de valeurs de probabilités de modèle ML reçu et le deuxième ensemble de valeurs de probabilités de modèle ML reçu, dans lequel le premier ensemble de valeurs de probabilités de modèle ML reçu et le deuxième ensemble de valeurs de probabilités de modèle ML reçu sont l'un parmi : des valeurs Softmax, des valeurs sigmoïdes et des valeurs de Dirichlet ;

la génération (s410) d'un troisième ensemble de valeurs de probabilités de modèle ML par échantillonnage en utilisant la matrice de poids générée ;

la génération (s412) d'un premier ensemble d'impressions de données (data impressions) en utilisant le troisième ensemble de valeurs de probabilités de modèle ML généré, dans lequel le premier ensemble d'impressions de données inclut des impressions de données pour chacune des une ou plusieurs étiquettes différentes de toute étiquette du premier ensemble d'étiquettes, dans lequel les impressions de données représentent des caractéristiques de données anonymisées pour chacune des une ou plusieurs étiquettes ;

la génération (s414) d'un second ensemble d'impressions de données par regroupement en utilisant le premier ensemble d'impressions de données généré pour chacune des une ou plusieurs étiquettes différentes de toute étiquette du premier ensemble d'étiquettes ; et

l'entraînement (s416) d'un modèle ML global en utilisant le second ensemble d'impressions de données généré.

2. Procédé selon la revendication 1, comprenant en outre :

la génération d'un quatrième ensemble de valeurs de probabilités de modèle ML par calcul de moyenne en utilisant le premier ensemble d'impressions de données et le second ensemble d'impressions de données pour chaque étiquette du premier ensemble d'étiquettes et les une ou plusieurs étiquettes différentes de toute étiquette du premier ensemble d'étiquettes ; et

la fourniture du quatrième ensemble de valeurs de probabilités de modèle ML généré à la pluralité de dispositifs informatiques locaux, incluant le premier dispositif informatique local et le deuxième dispositif informatique local, pour l'entraînement de modèles ML locaux.

3. Procédé selon l'une quelconque des revendications 1 ou 2, dans lequel la matrice de poids générée est une matrice de similitude de classes et la matrice de similitude de classes est générée selon :

$$C(i,j) = \frac{\mathbf{w}_i^T \mathbf{w}_j}{||\mathbf{w}_i|| \, ||\mathbf{w}_j||}$$

où $w_i$ est un vecteur des poids connectant les nœuds de la couche précédente au nœud de classe i et $C \in R^{K \times K}$ est la matrice de similitude pour K étiquettes dans le premier ensemble de valeurs de probabilités de modèle ML reçu et le deuxième ensemble de valeurs de probabilités de modèle ML reçu.

4. Procédé selon l'une quelconque des revendications 1 à 3, dans lequel l'échantillonnage utilisant la matrice de poids générée s'effectue selon :

```
Softmax = Dir (K, C)
```

où Dir est une fonction de distribution de Dirichlet et C est un paramètre de concentration qui contrôle la dispersion des valeurs Softmax sur les étiquettes dans le premier ensemble de valeurs de probabilités de modèle ML reçu et le deuxième ensemble de valeurs de probabilités de modèle ML reçu.

5. Procédé selon l'une quelconque des revendications 1 à 4, dans lequel le regroupement utilisant le premier ensemble d'impressions de données généré pour chacune des une ou plusieurs étiquettes différentes de toute étiquette du premier ensemble d'étiquettes s'effectue selon un algorithme de regroupement k-médoides et utilise la méthode du coude pour déterminer le nombre de regroupements k.

6. Procédé (500) d'apprentissage fédéré au niveau d'un dispositif informatique local (104), le procédé comprenant :

la réception (s502) d'un premier ensemble de données incluant un premier ensemble d'étiquettes ;

la génération (s504) d'un second ensemble de données incluant le premier ensemble d'étiquettes à partir du premier ensemble de données reçu et d'une ou plusieurs étiquettes différentes de toute étiquette du premier ensemble d'étiquettes ;

l'entraînement (s506) d'un modèle d'apprentissage automatique, ML, local en utilisant le second ensemble de données généré ;

la génération (s508) d'une matrice de poids en utilisant les une ou plusieurs étiquettes différentes de toute étiquette du premier ensemble d'étiquettes ;

la génération (s510) d'un ensemble de valeurs de probabilités de modèle ML en utilisant la matrice de poids générée et le modèle ML local entraîné ;

la fourniture (s512) de l'ensemble généré de valeurs de probabilités de modèle ML à un dispositif informatique central, dans lequel l'ensemble généré de valeurs de probabilités de modèle ML est l'un parmi : des valeurs Softmax, des valeurs sigmoïdes et des valeurs de Dirichlet ;

la réception (s552) d'un ensemble de valeurs de probabilités de modèle ML en provenance du dispositif informatique central représentant un calcul de moyenne utilisant un premier ensemble d'impressions de données et un second ensemble d'impressions de données pour chaque étiquette du premier ensemble d'étiquettes et les une ou plusieurs étiquettes différentes de toute étiquette du premier ensemble d'étiquettes, dans lequel les impressions de données représentent des caractéristiques de données anonymisées pour chacune des une ou plusieurs étiquettes ; et

l'entraînement (s554) du modèle ML local en utilisant l'ensemble de valeurs de probabilités de modèle ML reçu.

7.  Procédé selon la revendication 6, dans lequel le premier ensemble de données reçu est un ensemble de données public et le second ensemble de données généré est un ensemble de données privé.

8.  Procédé selon l'une quelconque des revendications 6 ou 7, dans lequel le modèle ML local est l'un parmi : un réseau neuronal convolutif (CNN), un réseau neuronal artificiel (ANN), et un réseau neuronal récurrent (RNN).

9.  Procédé selon l'une quelconque des revendications 1 à 8, dans lequel la pluralité de dispositifs informatiques locaux, incluant le premier dispositif informatique local et le deuxième dispositif informatique local, comprend une pluralité de nœuds de réseau radio qui sont configurés pour classer un type d'alarme en utilisant les modèles ML locaux entraînés, ou dans lequel la pluralité de dispositifs informatiques locaux, incluant le premier dispositif informatique local et le deuxième dispositif informatique local, comprend une pluralité de dispositifs capteurs sans fil qui sont configurés pour classer un type d'alarme en utilisant les modèles ML locaux entraînés.

10.  Dispositif informatique central (102) comprenant :

une mémoire ; et

un processeur couplé à la mémoire, dans lequel le processeur est configuré pour exécuter un procédé (400) d'apprentissage fédéré pour :

fournir (s402) un premier ensemble de données incluant un premier ensemble d'étiquettes à une pluralité de dispositifs informatiques locaux incluant un premier dispositif informatique local et un deuxième dispositif informatique local ;

recevoir (s404), en provenance du premier dispositif informatique local, un premier ensemble de valeurs de probabilités de modèle d'apprentissage automatique, ML, issues de l'entraînement d'un premier modèle ML local utilisant le premier ensemble d'étiquettes ;

recevoir (s406), en provenance du deuxième dispositif informatique local, un deuxième ensemble de valeurs de probabilités de modèle ML issues de l'entraînement d'un deuxième modèle ML local utilisant le premier ensemble d'étiquettes et une ou plusieurs étiquettes différentes de toute étiquette du premier ensemble d'étiquettes ;

générer une matrice de poids en utilisant le premier ensemble de valeurs de probabilités de modèle ML reçu et le deuxième ensemble de valeurs de probabilités de modèle ML reçu, dans lequel le premier ensemble de valeurs de probabilités de modèle ML reçu et le deuxième ensemble de valeurs de probabilités de modèle ML reçu sont l'un parmi : des valeurs Softmax, des valeurs sigmoïdes et des valeurs de Dirichlet ;

générer un troisième ensemble de valeurs de probabilités de modèle ML par échantillonnage en utilisant la matrice de poids générée ;

générer un premier ensemble d'impressions de données en utilisant le troisième ensemble de valeurs de probabilités de modèle ML généré, dans lequel le premier ensemble d'impressions de données inclut des impressions de données pour chacune des une ou plusieurs étiquettes différentes de toute étiquette du premier ensemble d'étiquettes, dans lequel les impressions de données représentent des caractéristiques de données anonymisées pour chacune des une ou plusieurs étiquettes ;

générer un second ensemble d'impressions de données par regroupement en utilisant le premier ensemble d'impressions de données généré pour chacune des une ou plusieurs étiquettes différentes de toute étiquette du premier ensemble d'étiquettes ; et

entraîner un modèle ML global en utilisant le second ensemble d'impressions de données généré.

11. Dispositif informatique central selon la revendication 10, le dispositif informatique central étant configuré pour réaliser le procédé selon l'une quelconque des revendications 1 à 5.

12. Dispositif informatique local (104) comprenant :

une mémoire ;

un processeur couplé à la mémoire, dans lequel le processeur est configuré pour exécuter un procédé d'apprentissage fédéré pour :

recevoir un premier ensemble de données incluant un premier ensemble d'étiquettes ;

générer un second ensemble de données incluant le premier ensemble d'étiquettes à partir du premier ensemble de données reçu et d'une ou plusieurs étiquettes différentes de toute étiquette du premier ensemble d'étiquettes ;

entraîner un modèle d'apprentissage automatique (ML) local en utilisant le second ensemble de données généré ;

générer une matrice de poids en utilisant les une ou plusieurs étiquettes différentes de toute étiquette du premier ensemble d'étiquettes ;

générer un ensemble de valeurs de probabilités de modèle en utilisant la matrice de poids générée et le modèle ML local entraîné ;

fournir l'ensemble généré de valeurs de probabilités de modèle à un dispositif informatique central, dans lequel l'ensemble généré de valeurs de probabilités de modèle ML est l'un parmi : des valeurs Softmax, des valeurs sigmoïdes et des valeurs de Dirichlet ;

recevoir un ensemble de valeurs de probabilités de modèle ML en provenance du dispositif informatique central représentant un calcul de moyenne utilisant un premier ensemble d'impressions de données et un second ensemble d'impressions de données pour chaque étiquette du premier ensemble d'étiquettes et les une ou plusieurs étiquettes différentes de toute étiquette du premier ensemble d'étiquettes, dans lequel les impressions de données représentent des caractéristiques de données anonymisées pour chacune des une ou plusieurs étiquettes ; et

entraîner le modèle ML local en utilisant l'ensemble de valeurs de probabilités de modèle ML reçu.

13. Dispositif informatique local selon la revendication 12, le dispositif informatique local étant configuré pour réaliser le procédé selon l'une quelconque des revendications 7 à 8.

FIG. 1

FIG. 2

FIG. 3A

FIG. 3B

400

s402

providing a first dataset including a first set of labels to a plurality of local computing devices including a first local computing device and a second local computing device

s404

receiving, from the first local computing device, a first set of ML model probabilities values from training a first local ML model using the first set of labels

s406

receiving, from the second local computing device, a second set of ML model probabilities values from training a second local ML model using the first set of labels and one or more labels different from any label in the first set of labels

s408

generating a weights matrix using the received first set of ML model probabilities values and the received second set of ML model probabilities values

s410

generating a third set of ML model probabilities values by sampling using the generated weights matrix

s412

generating a first set of data impressions using the generated third set of ML model probabilities values, wherein the first set of data impressions includes data impressions for each of the one or more labels different from any label in the first set of labels

s414

generating a second set of data impressions by clustering using the generated first set of data impressions for each of the one or more labels different from any label in the first set of labels

s416

training a global ML model using the generated second set of data impressions

FIG. 4A

450

s452

generating a fourth set of ML model probabilities values by averaging using the first set of data impressions and the second set of data impressions for each label of the first set of labels and the one or more labels different from any label in the first set of labels

s454

providing the generated fourth set of ML model probabilities values to the plurality of local computing devices, including the first local computing device and the second local computing device, for training local ML models

FIG. 4B

FIG. 5A

550

s552

receiving a set of ML model probabilities values from the central computing device representing an averaging using a first set of data impressions and a second set of data impressions for each label of the first set of labels and the one or more labels different from any label in the first set of labels

s554

training the local ML model using the received set of ML model probabilities values

FIG. 5B

FIG. 6

Apparatus
600

MODULE(S)
700

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2019050736 W

- IN 2020050618 W

**Non-patent literature cited in the description**

- **GAUTHAM KRISHNA et al.** Resource-Constrained Federated Learning with Heterogeneous Labels and Models. *ARXIV*, 06 November 2020, https://arxiv. org/pdf/2011.03206

- **NAYAK GAURAV KUMAR et al.** Zero-Shot Knowledge Distillation in Deep Networks. *ARXIV*, 20 May 2019, https://arxiv.org/pdf/1905.08114.pdf
- **BONAWITZ, KEITH et al.** Towards federated learning at scale: System design. *arXiv:1902.01046*, 2019